# EUROPEAN PATENT APPLICATION

(11) **EP 2 192 801 A1**
(43) Date of publication of application: **02.06.2010**
(21) Application number: 08784104.5
(22) Date of filing: 22.08.2008
(51) Int. Cl.: H04W 24/00, H04W 88/08

(54) **INTERCEPTION METHOD, INTERCEPTION DEVICE, BASE STATION AND BASE STATION CONTROLLER**

(30) Priority: 21.09.2007 CN 200710122166
(71) Applicant: Huawei Technologies Co., Ltd., Longgang District, Shenzhen Guangdong 518129 (CN)
(72) Inventor: LIU, Tao, Shenzhen Guangdong 518129 (CN); DENG, Zhe, Shenzhen Guangdong 518129 (CN)
(74) Representative: Körber, Martin Hans
(86) International application number: PCT/CN2008/072113
(87) International publication number: WO 2009/043247

(57) **Abstract**

The embodiments of the present invention relate to an interception method, including: selecting a time slot combination on an E1/T1 link to configure an operation and maintenance, OM, link channel; transmitting an interception message or receiving an interception message through the configured OM link channel; and re-selecting a time slot combination on the E1/T1 link to configure the OM link channel, if a response message to the transmitted interception message is not received or the interception message is not received. The embodiments of the present invention also relate to an interception device, a base station and a base station controller. Thus, with the embodiments of the present invention, if an E1/T1 link is used as transmission link carrier, the OM link channel can be configured by automatically selecting certain time slot combinations, where the time slot combinations are transmitting traffic data. In this way, the OM link channel is not fixed on a certain time slot of the E1/T1 link. Thus, the multiplex degree of transmission resources can be efficiently increased.

## Description

### FIELD OF THE INVENTION

The embodiments of the present invention relate to the field of mobile communications, and particularly, to an interception method and device, a base station (BS) and a base station controller (BSC).

### BACKGROUND OF THE INVENTION

E1 and T1 are abbreviations of the names of two different modes of links in a Pulse Code Modulation (PCM) digital system. E1 is a PCM30 mode and is a European standard. There are 32 time slots on an E1 link. T1 is a PCM24 mode and is an America standard. There are 24 time slots on a T1 link. In the evolution of a packetization network, to reconstruct the existing BSs that use E1/T1 links as physical links and are based on Time Division Multiplex (TDM) exchange, a packetization reconstruction of time slot multiplex is applied. That is, TDM exchange of the time slots of E1/T1 is performed, a plurality of time slots of E1/T1 is combined into a High Level Data Link Control Protocol (HDLC) channel/Point to Point Protocol (PPP) channel, and packet data is transmitted through these channels to implement statistic multiplex. In this way, the transmission efficiency is improved.

Generally, a BS is placed outdoors, and maintenance of the BS is carried out mainly through an operation and maintenance (OM) channel between the BS and a base station controller (BSC). Thus, the OM channel between the BS and the BSC is very important in a radio communication system.

An existing OM channel is established in a way of specifying a fixed time slot. That is, in a mobile communication system using E1/T1 as a transmission link, the OM channel between the BSC and the BS is fixed on a fixed time slot of an E1/T1 link, and the fixed time slot is dedicated to operations and maintenance.

With such an approach using a fixed time slot as the OM channel, time slot resources of the fixed time slot of the OM channel cannot be multiplexed to transmit traffic data, thereby the usage of the transmission resources is not maximized.

### SUMMARY OF THE INVENTION

The embodiments of the present invention provide an interception method and device, a BS and a BSC, so that certain time slots can be selected automatically between the BS and the BSC to transmit the OM information. Therefore, the OM channel can be efficiently combined with the traffic channel to increase the multiplex degree of resources for transmission, and reduce resources for transmission.

An embodiment of the present invention provides an interception method, including: selecting a time slot combination on an E1/T1 link to configure an operation and maintenance, OM, link channel; transmitting an interception message or receiving an interception message through the configured OM link channel; and re-selecting a time slot combination on the E1/T1 link to configure an OM link channel, if a response message to the transmitted interception message is not received or the interception message is not received.

An embodiment of the present invention provides an interception device, including: a selecting module, adapted to select a time slot combination on an E1/T1 link to configure an operation and maintenance, OM, link channel; a transmitting/receiving module, adapted to transmit or receive an interception message through the configured OM link channel; and a judging module, adapted to judge whether a response message to the transmitted interception message is received or the interception message is received, and if a response message to the transmitted interception message is not received or the interception message is not received, re-select a time slot combination on the E1/T1 link to configure an OM link channel.

An embodiment of the present invention provides a base station, including: an interception control module, adapted to select an E1/T1 link and select a time slot combination on the E1/T1 link; a channel configuration module, adapted to configure, on the E1/T1 link, an operation and maintenance, OM, link channel corresponding to a specified time slot combination; and an OM link channel protocol module, adapted to transmit the interception message and receive a response to the interception message through the configured OM link channel.

An embodiment of the present invention provides a base station, including: an interception control module, adapted to select an E1/T1 link and select a time slot combination on the E1/T1 link, and construct an interception message; a channel configuration module, adapted to configure, on the E1/T1 link, an operation and maintenance, OM, link channel corresponding to a specified time slot combination; and an OM link channel protocol module, adapted to receive the interception message through the configured OM link channel.

An embodiment of the present invention provides a base station controller, including: an interception control module, adapted to select a specified E1/T1 link; a channel configuration module, adapted to configure, on the E1/T1 link, an operation and maintenance, OM, link channel corresponding to the specified time slot combination; and an OM link channel protocol module, adapted to receive an interception message and return a response to the interception message through the configured OM link channel.

An embodiment of the present invention further provides a base station controller, including: an interception control module, adapted to select a specified E1/T1 link and construct an interception message; a channel configuration module, adapted to configure, on the E1/T1 link, an operation and maintenance, OM, link channel corresponding to the specified time slot combination; and an OM link channel protocol module, adapted to transmit an interception message through the configured OM link channel.

Therefore, the interception method and device, as well as the BS and the BSC implements that following: if an E1/T1 link is used as a transmission link carrier, the OM link channel between the BS and the BSC can be established automatically to transmit the OM information by selecting certain time slot combinations, where the time slot combinations can also transmit traffic data. In this way, the OM link channel between the BS and the BSC is not fixed on a certain time slot of the E1/T1 link. Therefore, the OM and traffic channel is no longer fixed. This not only meets diversity and uncertainty of service development, but also efficiently combines the OM channel and the traffic channel to increase the multiplex degree of transmission resources.

### BRIEF DESCRIPTION OF THE DRAWINGS

Fig. 1 is a flowchart of a time slot combination unknown side transmitting message according to Embodiment 1 of an interception method of the present invention;
Fig. 2 is a flowchart of a time slot combination known side receiving message according to Embodiment 1 of an interception method of the present invention;
Fig. 3 is a flowchart of a time slot combination unknown side receiving message according to Embodiment 2 of an interception method of the present invention;
Fig. 4 is a flowchart of a time slot combination known side transmitting message according to Embodiment 2 of an interception method of the present invention;
Fig. 5 is a schematic diagram of Embodiment 1 of a base station of the present invention;
Fig. 6 is a schematic diagram of Embodiment 1 of a base station controller of the present invention;
Fig. 7 is a schematic diagram of Embodiment 2 of a base station of the present invention; and
Fig. 8 is a schematic diagram of Embodiment 2 of a base station controller of the present invention.

### DETAILED DESCRIPTION OF THE EMBODIMENTS

The technical solutions of the embodiments of the present invention are described in detail as follows with reference to the drawings and embodiments.

### Embodiment 1 of Interception Method

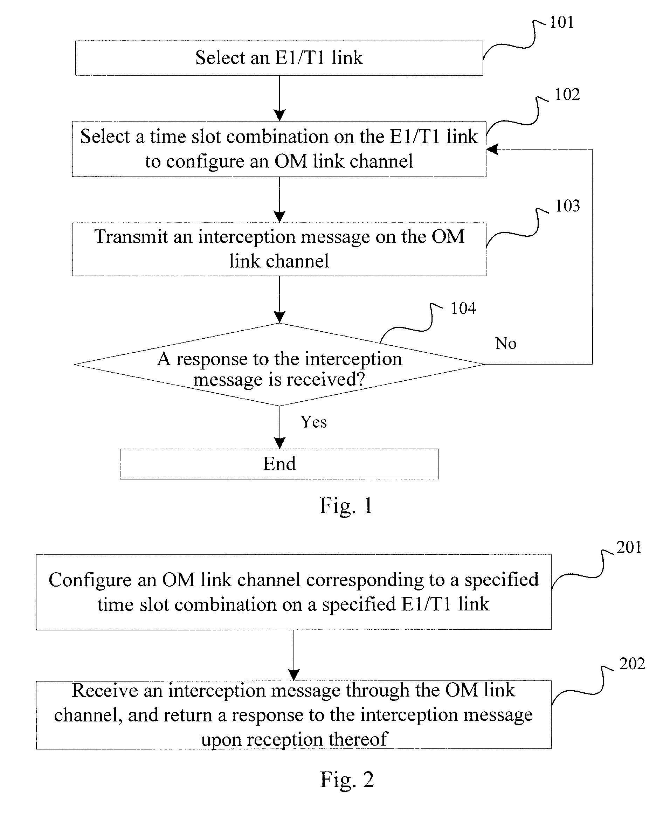

Fig. 1 is a flowchart of a time slot combination unknown side transmitting message according to Embodiment 1 of an interception method of the present invention. The procedure is described as follows.

In step 101, an E1/T1 link is selected.

Because there may be multiple E1/T1 links, and it is unknown that which link is to be used, an method of specifying priorities for ports may be adopted to determine a link to be used. For example, the highest priority is specified for port No. 0 of a tr ansmission resource, and the second highest priority is specified for port No. 1. That is, an interception is first performed on the E1/T1 link of port No. 0, and if the interception fails, an interception is performed on the E1/T1 link of port No. 1.

In step 102, a time slot combination is selected on the E1/T1 link to configure an operation and maintenance (OM) link channel.

Taking an E1 link as an example, an E1 link has 32 time slots, 31 time slots of which, except time slot 0 reserved by the system, can be used to configure an OM link channel. There are totally N optional time slot combinations in case of the 31 time slots, where 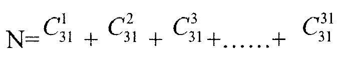 Therefore, all combinations of the 31 time slots shall be attempted one by one to establish the OM link channel. In the present embodiment, with respect to the E1 link, it is preferable to perform an interception by selecting a time slot combination of less than 5 time slots.

In case of a T1 link, a T1 link has 24 time slots, 23 time slots of which, except time slot 0 reserved by the system, can be used to configure an OM link channel. There are totally M optional time slot combinations in case of the 23 time slots, where 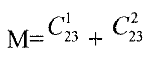

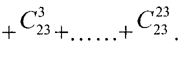 Therefore, all combinations of the 23 time slots shall be attempted one by one to establish an OM link channel. In the present embodiment, with respect to the T1 link, it is preferable to perform an interception by selecting a time slot combination of less than 5 time slots.

In step 103, an interception message is transmitted through the configured OM link channel.

In step 104, the procedure returns to step 102 if a response to the interception message is not received until the wait times out. The procedure is terminated if a response to the interception message is received. In this case, time slots corresponding to the time slot combination are the time slots to be searched.

Because the time slot combination is configured in advance, the time slot combination unknown side needs to search for the configured time slot combination. When the time slot combination known side receives the interception message sent by the time slot combination unknown side in the configured time slot combination, which indicates that the time slot combination is matched, a response to the interception message is sent back to the time slot combination unknown side to indicate that the time slot combination used by the time slot combination unknown side itself is the configured time slot combination. During the transmission of data traffic information, such time slot combination can be used to multiplex the transmission of OM information. When those time slots transmit traffic data, and when the OM information needs to be transmitted, the time slots are used to multiplex the transmission of OM information.

If a response to the interception message is not received for each of the time slot combinations on the E1/T1 link, or a response to the interception message is not received for each of the time slot combinations specified on the E1/T1 link, it indicates that instead of the E1/T1 link, another E1/T1 link needs to be selected, such as an E1/T1 link having a subordinate priority, and a time slot combination on the selected E1/T1 link needs to be selected to configure an OM link channel to perform the above inception, till a matched time slot combination is intercepted.

The above procedure is a procedure at the time slot combination unknown side. Fig. 2 is a flowchart of a time slot combination known side receiving message according to Embodiment 1 of an interception method of the present invention. The procedure is described in detail as follows.

In step 201, an OM link channel corresponding to a specified time slot combination is configured on a specified E1/T1 link.

In step 202, the time slot combination known side performs a process of receiving an interception message through the configured OM link channel, and returns a response to the interception message when the interception message is received through the configured OM link channel.

In the present embodiment, the time slot combination known side performs a process of receiving an interception message through an OM link channel corresponding to a specified time slot combination ,and when the interception message is received, which indicates that the time slot combination used by the counterpart side for configuring the OM link channel is correct, and then a response to the interception message is returned through the OM link channel to notify the counterpart side that the configuration is correct.

### Embodiment 1 of Interception Device

The Embodiment 1 interception device of the invention includes: a selecting module adapted to select a time slot combination on an E1/T1 link to configure an OM link channel; a transmitting/receiving module adapted to transmit an interception message through the configured OM link channel; and a judging module adapted to judge whether a response to the interception message is received.

Therefore, with Embodiment 1 of the interception method and Embodiment 1 of the interception device of the invention, if an E1/T1 link is used as transmission link carrier, the OM link channel can be established automatically to transmit the OM information by selecting certain time slot combinations, where the time slot combinations can also transmit traffic data, in a way of transmitting an interception message and returning a response thereto, In this way, the OM link channel is not fixed on a certain time slot of the E1/T1 link. Therefore, it is not necessary to use a fixed time slot as the OM channel. This not only meets diversity and uncertainty of service development, but also efficiently combines the OM channel and the traffic channel to increase the multiplex degree of transmission resources.

### Embodiment 2 of Interception Method

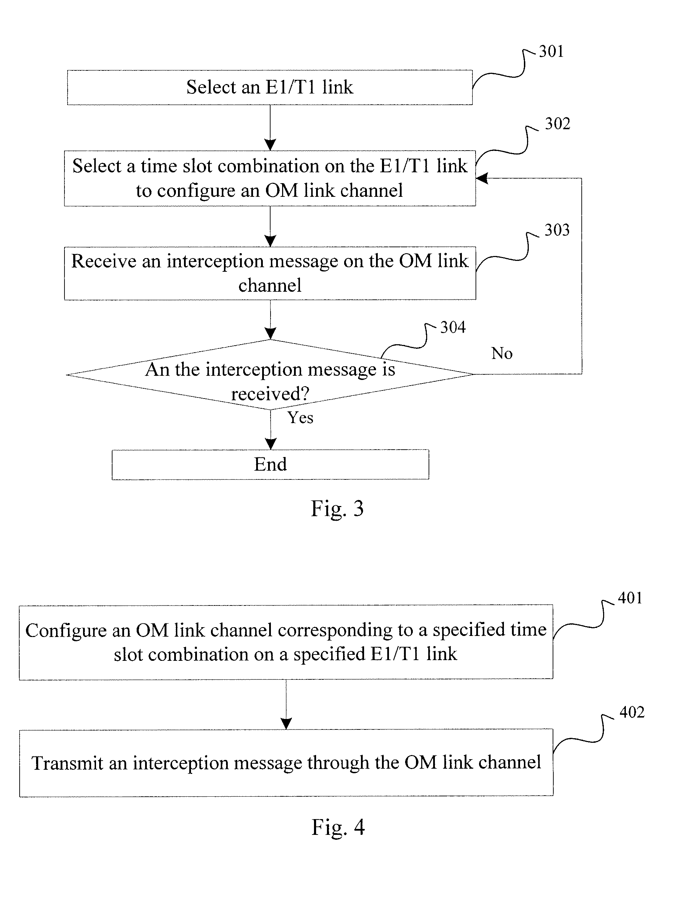

Fig. 3 is a flowchart of a time slot combination unknown side receiving message according to Embodiment 2 of an interception method of the present invention. The procedure is described in detail as follows.

In step 301, an E1/T1 link is selected.

Because there may be multiple E1/T1 links, and a link to be used is unknown, an approach of specifying priorities for ports ma y be adopted. For example, the highest priority is specified for port No. 0 of a transmission resource, and the second highest priority is specified for port No. 1. That is, an interception is first performed on the E1/T1 link of port No. 0, and after the interception fails, an interception is performed on the E1/T1 link of port No. 1.

In step 302, a time slot combination is selected on the E1/T1 link to configure an OM link channel.

Taking an E1 link as an example, an E1 link has 32 time slots, 31 time slots of which, except time slot 0 reserved by the system, can be used to configure an OM link channel. There are totally N optional time slot combinations in case of the 31 time slots, where 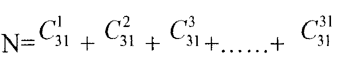 .Therefore, all combinations of the 31 time slots shall be attempted one by one to establish an OM link channel. In the present embodiment, with respect to the E1 link, it is preferable to perform an interception by selecting a time slot combination of less than 5 time slots.

In case of a T1 link, a T1 link has 24 time slots, 23 time slots of which, except time slot 0 reserved by the system, can be used to configure an OM link channel. There are totally M optional time slot combinations in case of the 23 time slots, where 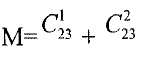 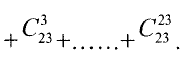 Therefore, all combinations of the 23 time slots shall be attempted one by one to establish an OM link channel. In the present embodiment, with respect to the T1 link, it is preferable to perform an interception by selecting a time slot combination of less than 5 time slots.

In step 303, a process of receiving an interception message through the configured OM link channel is repeated.

In step 304, the procedure returns to step 302 if an interception message is not received until the wait times out. The procedure is terminated if an interception message is received. In this case, time slots corresponding to the time slot combination of this point is the time slots to be searched.

Because the time slot combination is configured in advance, and a time slot combination known side transmits an interception message at the configured time slot combination on the link, when the time slot combination unknown side searches for the configured time slot, if the interception message sent by the time slot combination known side is received, it indicates that the time slot combination is matched. During the transmission of data traffic information, such time slot combination can be used to multiplex the transmission of OM information. Because those time slots transmit traffic data, when the OM information needs to be transmitted, they are used to multiplex the transmission of the OM information.

If an interception message is not received for each of the time slot combinations on the E1/T1 link, or an interception message is not received for each of the time slot combinations specified on the E1/T1 link, it indicates that instead of the E1/T1 link, another E1/T1 link needs to be selected, such as an E1/T1 link having a subordinate priority as mentioned above, and a time slot combination on the selected E1/T1 link needs to be selected to configure an OM link channel to perform the above inception, till a matched time slot combination is intercepted.

The above procedure is a procedure at the time slot combination unknown side. As shown in Fig. 4, is a flowchart a time slot combination known side transmitting message according to Embodiment 2 of an interception method of the present invention. The procedure is described in detail as follows.

In step 401, an OM link channel corresponding to a specified time slot combination is configured on a specified E1/T1 link.

In step 402, an interception message is transmitted through the configured OM link channel.

In the present embodiment, the time slot combination known side transmits an interception message through an OM link channel corresponding to a specified time slot combination ,and when the interception message is received by the time slot combination unknown side, it indicates that the time slot combination used by the time slot combination unknown side counterpart for configuring the OM link channel is correct.

### Embodiment 2 of Interception Device

Embodiment 2 of an interception device of the invention includes: a selecting module adapted to select a time slot combination on an E1/T1 link to configure an OM link channel; a transmitting/receiving module adapted to receive an interception message through the configured OM link channel; and a judging module adapted to judge whether the interception message is received, and if the interception message is received, judge that the time slots corresponding to the time slot combination is the time slots to be searched.

Therefore, with Embodiment 2 of the interception method and Embodiment 2 of the interception device of the invention, the following is implemented: If the E1/T1 link is used as transmission link carrier, the OM link channel can be established automatically to transmit the OM information by selecting certain time slot combinations, where the time slot combinations can also transmit traffic data at the same time, in a way of transmitting an interception message, which is in turn received by the counterpart. In this way, the OM link channel is not fixed on a certain time slot of the E1/T1 link. Therefore, it is not necessary to use a fixed time slot as the OM channel. This not only meets diversity and uncertainty of service development, but also efficiently combines the OM channel and the traffic channel to increase the multiplex degree of transmission resources.

### Embodiment 1 of Base Station (BS)

When a BS of Embodiment 1 of the present invention is powered on and started, because the BS does not reserve any configuration information, the BS does not know time slot combinations of an E1/T1 link which are statistically multiplexed by an OM channel between the BS and a Base Station Controller (BSC). Therefore, the BS needs to perform an interception to find out the time slot combinations to be multiplexed b y the OM channel.

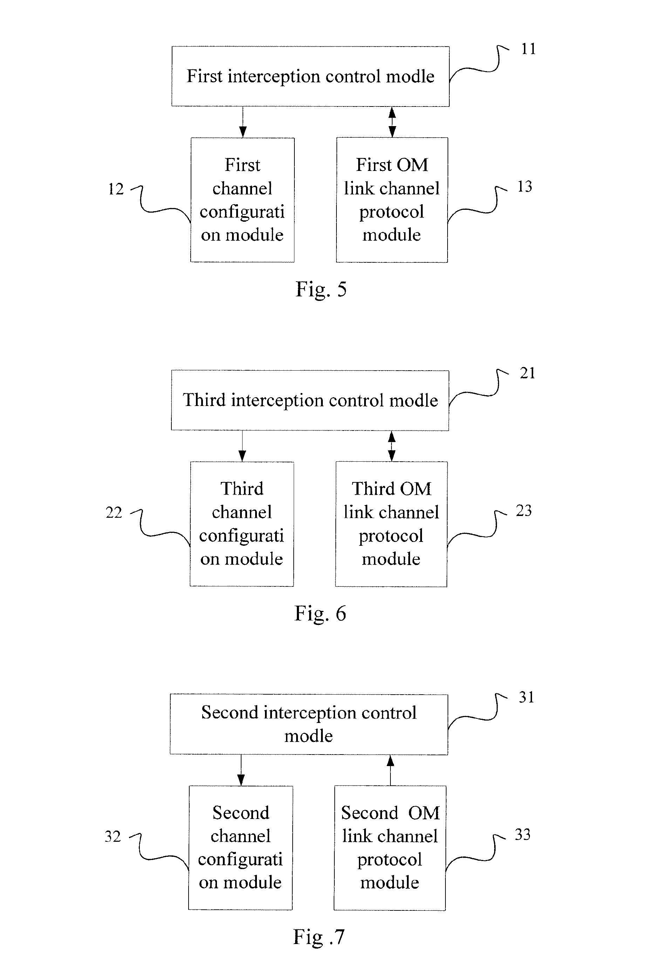

Fig. 5 is a schematic diagram of Embodiment 1 of a BS of the present invention. The BS includes: a first interception control module 11 adapted to select an E1/T1 link and select a time slot combination on the E1/T1 link, and construct an interception message; a first channel configuration module 12 adapted to configure, on the E1/T1 link, an OM link channel corresponding to a specified time slot combination; and a first OM link channel protocol module 13 adapted to transmit the interception message and receive a response thereto through the configured OM link channel.

Because there may be multiple E1/T1 links between the BS and the BSC, and a link to be used is unknown to the BS, an approach of specifying priorities for ports may be adopted. For example, the highest priority is specified for port No. 0 of a transmission resource may be specified, and the second highest priority is specified for port No. 1. That is, an interception is first performed on the E1/T1 link of port No. 0, and after the interception fails, an interception is performed on the E1/T1 link of port No. 1.

Similarly, taking an E1 link as an example, an E1 link has 32 time slots, 31 time slots of which, except time slot 0 reserved by the system, can be used to configure an OM link channel. There are totally N optional time slot combinations in case of the 31 time slots, where 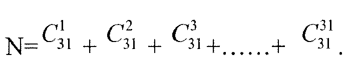 Therefore, all combinations of the 31 time slots shall be attempted by the BS one by one to establish an OM link channel with the BSC. In the present embodiment, with respect to the E1 link, it is preferable to perform an interception by selecting s time slot combination of less than 5 time slots.

In case of a T1 link, a T1 link has 24 time slots, 23 time slots of which, except time slot 0 reserved by the system, can be used to configure an OM link channel. There are totally M optional time slot combinations in case of the 23 time slots, where 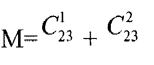 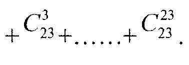 Therefore, all combinations of the 23 time slots shall be attempted one by one to establish an OM link channel. In the present embodiment, with respect to the T1 link, it is preferable to perform an interception by selecting a time slot combination of less than 5 time slots.

When the BS is started, the first interception control module 11 of the BS selects an E1/T1 link and selects a time slot combination on the E1/T1 link, and constructs an interception message. The first interception control module 11 controls the first channel configuration module 12 to configure, on the E1/T1 link, an OM link channel corresponding to the selected time slot combination. Then, the first interception control module 11 controls the first OM link channel protocol module 13 to transmit the interception message and receive a response to the interception message through the configured OM link channel.

Because the time slot combination is configured in advance, the BS searches the configured time slot combination, and when the interception message sent by the BS is received, it indicates that the time slot combination is matched, and the BS receives a response to the interception message to indicate that the time slot combination is the configured time slot combination. During the transmission of data traffic information, such time slot combination can be used to multiplex the transmission of OM information. Because those time slots transmit traffic data, when the OM information needs to be transmitted, they are used to multiplex the transmission of the OM information.

If a response to the interception message is not received for each of the time slot combinations on the E1/T1 link, or a response to the interception message is not received for each of the time slot combinations specified on the E1/T1 link, it indicates that instead of the E1/T1 link, it is necessary for the BS to select another E1/T1 link, such as an E1/T1 link having a subordinate priority, and select a time slot combination on the selected E1/T1 link to configure an OM link channel to perform the above inception, until a matched time slot combination is intercepted.

### Embodiment 1 of Base Station Controller (BSC)

Because Embodiment 1 of a BSC of the present invention knows time slot combinations of an E1/T1 link which are statistically multiplexed by an OM channel between the BSC and a BS , the BSC ne eds to configure only the OM link channel corresponding to the specified time slot combination, based on the known E1/T1 link.

Fig. 6 is a schematic diagram of Embodiment 1 of a BSC of the present invention.
The BSC includes: a third interception control module 21 adapted to select a specified E1/T1 link; a third channel configuration module 22 adapted to configure, on the E1/T1 link, an OM link channel corresponding to a specified time slot combination; and a third OM link channel protocol module 23 adapted to receive an interception message through the configured OM link channel, and return a response to the interception message.

The third interception control module 21 selects the specified E1/T1 link, and configures the OM link channel corresponding to the specified time slot combination on the E1/T1 link. The OM link channel corresponding to the specified time slot combination is configured on the E1/T1 link through the third channel configuration module 22. Then, the third OM link channel protocol module 23 performed a process of receiving an interception message through the configured OM link channel, and returns a response to the interception message if the interception message is received.

Because the time slot combination is configured in advance, the BSC performs a process of receiving an interception message at the configured time slot combination on the link, and when the interception message is received, which indicates that the time slot combination is matched, the BSC returns a response to the interception message to indicate that the configured link and the time slot combination on the link are intercepted. During the transmission of data traffic information, such time slot combination can be used to multiplex the transmission of OM information. Because those time slots transmit traffic data, when the OM information needs to be transmitted, they are used to multiplex the transmission of the OM information.

In the present invention, Embodiment 1 of the BS is always the unknown side of the time slot combination configuration, while Embodiment 1 of the BSC is always the known side of the time slot combination configuration. During the interception of a time slot combination, the interception messages transmitted by the BS and the BSC are the same. Therefore, with Embodiment 1 of the BS and Embodiment 1 of the BSC of the invention, the following is implemented: if the E1/T1 link is used as transmission link carrier, the OM link channel between the BSC and the BS can be established automatically to transmit the OM information by selecting certain time slot combinations, where the time slot combinations can also transmit traffic data at the same time, in a way of transmitting an interception message and returning a response thereto. In this way, the OM link channel is not fixed on a certain time slot of the E1/T1 link. Therefore, the OM and traffic channel is not necessarily fixed. This not only meets diversity and uncertainty of service development, but also efficiently combines the OM channel and the traffic channel to increase the multiplex degree of transmission resources.

### Embodiment 2 of BS

When a BS is powered on and started, because the BS does not reserve any configuration information, the BS does not know time slot combinations of an E1/T1 link which are statistically multiplexed by an OM channel between the BS and a BSC. Therefore, the BS needs to perform an interception to find out the time slot combinations to be multiplexed by the OM channel.

Fig. 7 is a schematic diagram of Embodiment 2 of a BS of the present invention, including: a second interception control module 31 adapted to select an E1/T1 link and select a time slot combination on the E1/T1 link; a second channel configuration module 32 adapted to configu re, on the E1/T1 link, an OM link channel corresponding to a specified time slot combination; and a second OM link channel protocol module 33 adapted to re ceive an interception message through th e configured OM link channel. Because there may be multiple E1/T1 links between the BS and the BSC, and a link to be used is unknown to the BS, an approach of specifying priorities for ports may be adopted. For example, the highest priority is specified for port No. 0 of a transmission resource, and the second priority is specified for port No. 1. That is, an interception is first performed on the E1/T1 link of port No. 0, and after the interception fails, an interception is performed on the E1/T1 link of port No. 1.

Similarly, taking an E1 link as an example, an E1 link has 32 time slots, 31 time slots of which, except time slot 0 reserved by the system, can be used to configure an OM link channel. There are totally N optional time slot combinations in case of the 31 time slots, where 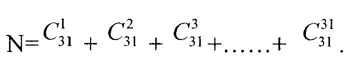 Therefore, all combinations of the 31 time slots shall be attempted by the BS one by one to establish an OM link channel with the BSC. In the present embodiment, with respect to the E1 link, it is preferable to perform an interception by selecting a time slot combination of less than 5 time slots.

In case of a T1 link, a T1 link has 24 time slots, 23 time slots of which, except time slot 0 reserved by the system, can be used to configure an OM link channel. There are totally M optional time slot combinations in case of the 23 time slots, where 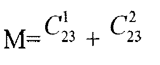

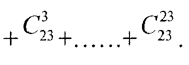 Therefore, all combinations of the 23 time slots shall be attempted one by one to establish an OM link channel. In the present embodiment, with respect to the T1 link, it is preferable to perform an interception by selecting a time slot combination of less than 5 time slots.

When the BS is started, the second interception control module 31 of the BS selects an E1/T1 link and selects a time slot combination on the E1/T1 link. The second interception control module 31 controls the second channel configuration module 32 to configure, on the E1/T1 link, an OM link channel corresponding to the selected time slot combination. Then, the second interception control module 31 controls the second OM link channel protocol module 33 to receive an interception message through the configured OM link channel.

Because the time slot combination is configured in advance, the BS searches the configured time slot combination, and when an interception message is received by the BS, it indicates that the time slot combination is matched, and that the time slot combination is the configured time slot combination. During the transmission of data traffic information, such time slot combination can be used to multiplex the transmission of OM information. Because those time slots transmit traffic data, when the OM information needs to be transmitted, they are used to multiplex the transmission of the OM information.

If an interception message is not received for each of the time slot combinations on the E1/T1 link, or a response to the interception message is not received for each of the time slot combinations specified on the E1/T1 link, it indicates that instead of the E1/T1 link, it is necessary for the BS to select another E1/T1 link, such as an E1/T1 link having a subordinate priority as mentioned above, and select a time slot combination on the selected E1/T1 link to configure an OM link channel to perform the above inception, until a matched time slot combination is intercepted.

### Embodiment 2 of BSC

A BSC of Embodiment 2 of the present invention knows time slot combinations of an E1/T1 link which are statistically multiplexed by an OM channel between the BSC and a BS. Therefore, the BSC needs to configure only the OM link channel corresponding to the specified time slot combination, based on the known E1/T1 link.

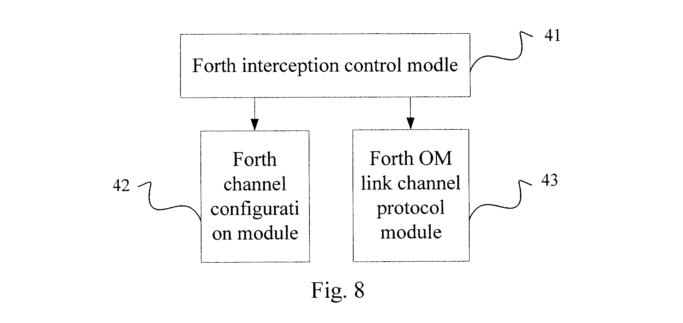

Fig. 8 is a schematic diagram of Embodiment 2 of a BSC of the present invention.
The BSC includes: a fourth interception control module 41 adapted to select a specified E1/T1 link and construct an interception message; a fourth channel configuration module 42 adapted to configu re, on the E1/T1 link, an OM link channel corresponding to a specified time slot combination; and a fourth OM link channel protocol module 43 adapted to transmit an interception message through the configured OM link channel.

The fourth interception control module 41 selects the specified E1/T1 link, configures, on the E1/T1 link, the OM link channel corresponding to the specified time slot combination, and constructs an interception message. The OM link channel corresponding to the specified time slot combination is configured on the E1/T1 link through the fourth channel configuration module 42. Then, the fourth OM link channel protocol module 43 transmits the interception message through the configured OM link channel.

Because the time slot combination is configured in advance, the BSC transmits the interception message at the configured time slot combination on the link, and when the interception message is received by the counterpart, it indicates that the time slot combination is matched, and a response to the interception message will be returned. The BSC receives the response to the interception message, which indicates that the configured link and the time slot combination on the link are intercepted. During the transmission of data traffic information, such time slot combination can be used to multiplex the transmission of OM information. Because those time slots transmit traffic data, when the OM information needs to be transmitted, they are used to multiplex the transmission of the OM information.

Embodiment 2 of the BS of the present invention is always the unknown side of the time slot combination configuration, and Embodiment 2 of the BSC is always the known side of the time slot combination configuration. During the interception of time slot combination, the interception messages transmitted by the BS and the BSC are the same. Therefore, with Embodiment 2 of the BS and Embodiment 2 of the BSC of the invention, the following is implemented: If the E1/T1 link is used as transmission link carrier, the OM link channel between the BS and BSC can be established automatically to transmit the OM information by selecting certain time slot combinations, where the time slot combinations can also transmit traffic data at the same time, in a way of transmitting an interception message and receiving it by the counterpart. In this way, the OM link channel is not fixed on a certain time slot of the E1/T1 link. Therefore, the OM and traffic channel is not necessarily fixed. This not only meets diversity and uncertainty of service development, but also efficiently combines the OM channel and the traffic channel to increase the multiplex degree of transmission resources.

To be noted, the above embodiments are only descriptions of the technical solutions of the embodiments of the present invention, and are not limitations thereto. Although the present invention is described in detail by reference to the exemplary embodiments, it is appreciated by a person skilled in the art that, the technical solutions of the embodiments of the present invention can be modified or equivalently replaced, without deviating from the scope of the technical solutions of the embodiments of the present invention.

## Claims

1. An interception method, comprising:
selecting a time slot combination on an E1/T1 link to configure an operation and maintenance, OM, link channel;
transmitting an interception message or receiving an interception message through the configured OM link channel;
re-selecting a time slot combination on the E1/T1 link to configure an OM link channel, if a response message to the transmitted interception message is not received or the interception message is not received.

2. The interception method according to claim 1, further comprising:
ending the process of transmitting the interception message or ending the process of receiving the interception message, if a response message to the transmitted interception message is received or the interception message is received.

3. The interception method according to claim 1, before the process of selecting the time slot combination on the E1/T1 link, further comprising:
selecting the E1/T1 link.

4. The interception method according to claim 3, wherein the process of selecting the E1/T1 link comprises specifying a priority for a port.

5. The interception method according to claim 3, before the process of selecting the E1/T1 link, further comprising:
configuring a time slot combination in advance.

6. An interception device, comprising:
a selecting module, adapted to select a time slot combination on an E1/T1 link to configure an operation and maintenance, OM, link channel;
a transmitting/receiving module, adapted to transmit or receive an interception message through the configured OM link channel; and
a judging module, adapted to judge whether a response message to the transmitted interception message is received or the interception message is received, and if a response message to the transmitted interception message is not received or the interception message is not received, re-select a time slot combination on the E1/T1 link to configure the OM link channel.

7. The interception device according to claim 6, wherein the judging module is adapted to judge whether a response message to the transmitted interception message is received or the interception message is received, and if a response message to the transmitted interception message is received or the interception message is received, end the process of transmitting the interception message or end the process of receiving the interception message.

8. A base station, comprising:
an interception control module, adapted to select an E1/T1 link and select a time slot combination on the E1/T1 link;
a channel configuration module, adapted to configure, on the E1/T1 link, an operation and maintenance, OM, link channel corresponding to a specified time slot combination; and
an OM link channel protocol module, adapted to transmit the interception message and receive a response to the interception message through the configured OM link channel.

9. A base station, comprising:
an interception control module, adapted to select an E1/T1 link and select a time slot combination on the E1/T1 link, and construct an interception message;
a channel configuration module, adapted to configure, on the E1/T1 link, an operation and maintenance, OM, link channel corresponding to a specified time slot combination; and
an OM link channel protocol module, adapted to receive the interception message through the configured OM link channel.

10. A base station controller, comprising:
an interception control module, adapted to select a specified E1/T1 link;
a channel configuration module, adapted to configure, on the E1/T1 link, an operation and maintenance, OM, link channel corresponding to the specified time slot combination; and
an OM link channel protocol module, adapted to receive an interception message and return a response to the interception message through the configured OM link channel.

11. A base station controller, comprising:
an interception control module, adapted to select a specified E1/T1 link and construct an interception message;
a channel configuration module, adapted to configure, on the E1/T1 link, an operation and maintenance, OM, link channel corresponding to the specified time slot combination; and
an OM link channel protocol module, adapted to transmit an interception message through the configured OM link channel.
